# EUROPÄISCHE PATENTANMELDUNG

(11) **EP 1 347 352 A2**
(43) Veröffentlichungstag der Anmeldung: **24.09.2003**
(21) Anmeldenummer: 03004167.7
(22) Anmeldetag: 26.02.2003
(51) Int. Cl.: G05B 19/042

(54) **Elektrisches Hausgerät**

(30) Priorität: 26.02.2002 DE 10208215
(71) Anmelder: BSH Bosch und Siemens Hausgeräte GmbH, 81669 München (DE)
(72) Erfinder: Bayer, Andreas, 94336 Hunderdorf (DE); Hausmann, Georg, 89407 Dillingen (DE); Jochimski, Peter, 89522 Heidenheim (DE); Mayer, Herbert, 93077 Bad Abbach (DE); Pfersch, Harald, 83395 Freilassing (DE); Schweier, Peter, 86735 Forheim (DE); Werkmann, Horst, 85276 Pfaffenhofen/Ilm (DE)

(57) **Zusammenfassung**

Durch die Erfindung wird ein elektrisches Hausgerät, insbesondere ein elektrisches Haushaltsgerät geschaffen, das über ein Kommunikationsmodul mit einem Datennetz verbunden ist, wobei das Datennetz wenigstens im Bereich des Hausgerätes von dem Spannungsversorgungsnetz gebildet wird (Powerline Communication). Das Kommunikationsmodul ist in einem Schacht (1) angeordnet, der mit einer einen Berührungsschutz bildenden Wand (10) ausgestattet ist, wodurch verhindert wird, dass ein Bediener, der das Kommunikationsmodul von dem Hausgerät entfernt oder in dieses hineinsteckt dabei elektrische Teile berührt und einen elektrischen Schlag erhält. Die Wand (10) hat außerdem die Funktion eines Spritzwasserschutzes, wie er bei wasserführenden Hausgeräten, beispielsweise einem Geschirrspüler oder einer Waschmaschine notwendig ist. Die Wand (10) ist gegen die rücktreibende Kraft von Federelementen (15) verschiebbar in dem Schacht (1) angeordnet.

## Beschreibung

Die Erfindung bezieht sich auf ein elektrisches Hausgerät, insbesondere ein elektrisches Haushaltgerät, das über eine in einem am oder im Hausgerät lösbar angebrachten Kommunikationsmodul angeordnete Schnittstelle mit einem Datennetz und/oder mit einem Spannungsversorgungsnetz verbindbar ist.

Aus der EP 0 802 465 A2 ist ein elektrisches Hausgerät, wie ein Geschirrspüler, ein Wäschetrockner, eine Waschmaschine, eine Beleuchtungseinrichtung, einer Heizungssteuerung od. dgl., bekannt, so dass über eine am oder im Hausgerät angeordnete Schnittstelle an ein zu mehreren Hausgeräten geführtes, von einem einzigen zentralen Steuerrechner steuerbares Bussystem anschließbar ist. Die Schnittstelle ist mit einem Busanschlussbaustein zur Übertragung von Steuerbefehlen und/oder Steuersignalen zwischen dem Bussystem und dem Hausgerät verbunden. Das Hausgerät ist mit einem Steckplatz zum lösbaren Anstecken des Steuerrechners versehen. Eine Kontaktanordnung am Steckplatz stellt die Verbindung des Steuerrechners mit der Schnittstelle her. Da der Steuerrechner auch an Steckplätzen anderer am Bussystem angeschlossener Hausgeräte angesteckt werden kann, läßt er sich flexibel einsetzen. Durch Umstecken des Steuerrechners läßt sich daher die Anlage von verschiedenen Stellen aus steuern.

Das bekannte Hausgerät zeichnet sich dadurch aus, dass es an ein Haus-Bussystem angeschlossen werden kann, jedoch nicht angeschlossen werden muß. Ein PC als Steuerrechner entfällt, und der an einen Steckplatz des Hausgerätes angepaßter Steuerrechner kann dort oder in einem beliebigen anderen Hausgerät angesteckt werden, das ebenfalls einen solchen Steckplatz besitzt. Der Ort der zentralen Steuerungsmöglichkeit ist daher frei wählbar und läßt sich jederzeit verändern, was zu einer hohen Flexibilität führt. Der Steuerrechner braucht also lediglich aus dem Steckplatz eines Hausgerätes herausgezogen und an den Steckplatz eines anderen Hausgerätes angesteckt zu werden, das möglicherweise eine zur zentralen Steuerung günstigere Position aufweist. Bei dem bekannten System ist es möglich, ein vernetztes System nach und nach aufzubauen, wobei die Hausgeräte zunächst ohne Bussystem und ohne Steuerrechner betrieben werden, der dann zu einem späteren Zeitpunkt angeschafft wird und lediglich in einen Steckplatz eingesteckt werden muß. Das Bussystem läßt sich nachträglich installieren, beispielsweise durch Verlegung von Leitungen an Wänden oder in Leerrohren. Derartige Leerrohre können schon beim Hausbau in kostengünstiger Weise konzipiert sein und erst später nach dem Kauf eines Steuerrechners in Betrieb genommen werden, wenn eine genügende Zahl von Hausgeräten vorhanden ist, die entsprechend ausgerüstet werden können oder bereits ausgerüstet sind. Die Anordnung, Anzahl und Art der Hausgeräte ist dabei nahezu beliebig wählbar, so dass das konzipierte System sehr variabel ist. Es muß kein gesonderter Platz für einen Steuerrechner vorgesehen werden, da dieser in variabler Weise in verschiedene Hausgeräte eingesteckt werden kann.

Neben dem Einsatz eines rein hausinternen Netzes existieren auch Netze, die wohnungsoder hausübergreifend sind, die eine Wohneinheit einbeziehen oder eine ganze Siedlung.

Ebenso können Netze Verbindungen schaffen zu den Herstellern der verschiedenen Hausgeräte, zu deren Kundendienststellen oder zu anderen Service-Providern, die bestimmte Dienstleistungen zur Verfügung stellen, die die Hausgeräte aufwerten oder im Hinblick auf die in ihnen eingesetzte Software auf den neuesten Stand bringen.

Besonders geeignet zur Verbindung von Hausgeräten über derartige Netze sind Spannungsversorgungsleitungen, über die die Hausgeräte mit der von ihnen benötigten Spannung, beispielsweise von 220 V und 50 Hz oder mit einer Spannung von 110 V und 60 Hz versorgen. Wenn derartige Spannungsversorgungsleitungen für die Übermittlung von Nachrichten eingesetzt werden (sog. Powerline Communication), entfällt die Notwendigkeit, zusätzliche Versorgungsleitungen für die Datenkommunikation mit niedrigeren Spannungen vorzusehen oder Funknetze zu schaffen.

Es ist möglich, dass über sog. "Gateways" auch verschiedene Netze miteinander verbunden werden können, beispielsweise Funknetze mit solchen Netzen, die die Versorgungsspannung der Hausgeräte für die Nachrichtenübertragung einsetzen.

Es ist Aufgabe der Erfindung, ein elektrisches Hausgerät der eingangs genannten Art derart weiterzubilden, dass es für die Nachrichtenübertragung über die Versorgungsspannungsleitungen nutzbar ist.

Erfindungsgemäß wird diese Aufgabe bei einem elektrischen Hausgerät der eingangs genannten Art damit gelöst, dass das Hausgerät zum Anschluss des Kommunikationsmoduls mit einem Berührungsschutz ausgestattete elektrische Anschlüsse zu dem Datennetz und/oder zu dem Spannungsversorgungsnetz aufweist.

Gemäß der vorliegenden Erfindung läßt sich also ein Hausgerät zunächst in herkömmlicher Weise als Einzelgerät bedienen und nutzen. Es läßt sich aber zu einem späteren Zeitpunkt nachrüsten, so dass es kommunikationsfähig ist und von beliebigen Stellen innerhalb des Netzes innerhalb oder außerhalb eines Haushalts bedient werden kann. Auf der anderen Seite werden Nachrichten und Informationen in dem Hausgerät ausgelesen und ausgewertet, wie von einer beliebigen Stelle innerhalb des Netzes eingegeben werden, entweder von dem Bediener, vom Kundendienst, vom Hersteller des Gerätes, usw.. Um das Hausgerät mit einem Kommunikationsmodul nachrüsten zu können, weist das Kommunikationsmodul Mittel zum Freilegen der elektrischen Anschlüsse von dem Berührungsschutz auf, so dass das Kommunikationsmodul mit dem Hausgerät elektrisch verbindbar ist.

Das Kommunikationsmodul, auch System-Interface genannt, ist einerseits für die Möglichkeit einer Spannungsversorgung mit Netzspannung ausgestattet und andererseits auch für die Datenübertragung über das Spannungsversorgungsnetz (Powerline Communication). Im Gegensatz zu der Steuerung des Haushaltgeräts als solchen für die Durchführung der Funktionen Waschen, Spülen, Kochen, Backen, Trocknen, etc. ist das Kommunikationsmodul ständig an das Spannungsversorgungsnetz angeschlossen. Dies hat den Vorteil, dass das Gateway die Datenkommunikation zum System-Interface aufrecht erhält, auch wenn das Haushaltgerät ausgeschaltet ist. Zum Beispiel kann der Gerätezustand "device-off", also "abgeschaltet", zuverlässig abgefragt werden. Umgekehrt kann das Gateway zu einem beliebigen Zeitpunkt das Vorhandensein des Haushaltgerätes ermitteln. Somit wäre etwa die Verwendung des Kommunikationsmoduls für den Kundendienstfall möglich, in dem das Haushaltgerät nicht mehr die normalen Funktionen durchführen kann.

Alternativ kann die Datenübertragung auch über ein gesondertes Datenübertragungsnetz erfolgen, das mit Kleinspannungen arbeitet. In diesem Fall bleibt der Berührungsschutz notwendig, weil die Spannungsversorgung des Kommunikationsmoduls weiterhin über das Spannungsversorgungsnetz erfolgt. Durch das Kommunikationsmodul können diverse Bussysteme unterstützt werden, z. B. LON-Bus, EIB-Bus, CeBus. Echonet, etc.)

Um bei Einsatz des Kommunikationsmoduls in das Hausgerät oder beim Herausnehmen des Kommunikationsmoduls aus dem Hausgerät zu verhindern, dass der Bediener einen elektrischen Schlag bekommt, weist das Hausgerät erfindungsgemäß einen Berührungsschutz auf, durch den die Versorgungsspannung von dem Bediener sicher abgeschirmt wird.

Der Berührungsschutz hat den weiteren Vorzug, dass er auch als Spritzwasserschutz dient, um Kurzschlüsse zu verhindern, die durch das elektrisch leitfähige Spritzwasser im Falle einer Geschirrspülmaschine oder einer Waschmaschine entstehen könnten.

Vorteilhafte Weiterbildungen des elektrischen Hausgeräts ergeben sich aus den Unteransprüchen. In einer vorteilhaften Weiterbildung weist das Hausgerät zur Aufnahme des Kommunikationsmoduls einen Schacht auf, der in eine zugehörige Ausnehmung an dem Hausgerät einschiebbar ist. Alternativ läßt sich der Schacht an das Hausgerät anstecken oder an dieses anschrauben. Falls ein Schacht vorhanden ist, beispielsweise an der Vorderfront des Hausgerätes, ist dieser, solange das Kommunikationsmodul nicht eingesetzt ist, vorzugsweise durch eine Abdeckplatte verschlossen, die abnehmbar angeordnet ist, um sie wieder einsetzen zu können, nachdem das Kommunikationsmodul in den Schacht hinein geschoben worden ist. Alternativ weist das Kommunikationsmodul selbst eine Vorderfront auf, die anstelle der Abdeckplatte tritt, nachdem das Kommunikationsmodul in das Hausgerät eingefügt wurde.

In einer bevorzugten Ausführungsform besteht der Schacht aus einem Schachtoberteil und einem Schachtunterteil, die auf verschiedene Weise miteinander verbunden sind. Geeignet ist eine Steckverbindung, eine Schnappverbindung oder eine Schraubverbindung. Bevorzugt sind solche Verbindungen, die lösbar sind, geeignet sind aber auch Verbindungen, die durch Kleben oder Zusammenschmelzen des Schachtoberteils und des Schachtunterteils zustande kommen.

In einer bevorzugten Ausführungsform weist das Kommunikationsmodul ein Gehäuse zur Aufnahme einer Leiterplatte auf. Auf der Leiterplatte sind die elektronischen Bestandteile des Kommunikationsmoduls aufgebracht. Darüber hinaus weist das System-Interface Anschlüsse zu dem Spannungsversorgungsnetz auf.

Besonders geeignet ist ein derartiges Gehäuse, wenn es in derselben Art wie der Schacht aus einem Gehäuseoberteil und einem Gehäuseunterteil besteht, die ineinander steckbar, verschnappbar oder verschraubbar ausgebildet sind.

Bevorzugt ist das Schachtunterteil so ausgebildet, dass es einer Aufnahme für eine verschiebbar gelagerte Wand aufweist, durch die Stecker für die Spannungsversorgung des System-lnterface abgeschirmt werden können. Besonders geeignet ist die Wand dann, wenn sie elastisch in dem Schacht gelagert ist und sich beim Hineinschieben des Gehäuses derart verschieben läßt, dass die Stecker freigelegt werden, so dass sie mit den Leiterbahnen auf der Leiterplatte des System-Interface verbunden werden. Um diese Verbindung zu schaffen, weist das Gehäuse als Schrägen ausgebildete Vorsprünge auf, die die Wand gegen die rücktreibende Kraft einer Feder verschieben, um die Stecker freizulegen. Die Federwirkung wird bevorzugt durch Vorsprünge an der Wand erreicht, die die Eigenelastizität des Materials, aus dem die Wand gebildet ist, ausnutzen.

Gemäß einer Weiterbildung der Erfindung dienen die elektrischen Anschlüsse, über die das System-Interface mit dem Spannungsversorgungsnetz verbunden ist, auch zur Netzwerkverbindung, d.h. als Datenein- und Datenausgänge.

Bevorzugt weist das System-Interface einen Mikrocontroller oder Mikroprozessor zur Steuerung des Hausgerätes oder zur Steuerung bestimmter Funktion des Hausgerätes oder zur Abgabe von Informationen über das Hausgerät in das Datennetz auf.

In einer geeigneten Weiterbildung ist der Mikrocontroller oder Mikroprozessor über eine universelle Programmierstelle, z. B. eine Monitorschnittstelle, programmierbar.

Als geeignet hat es sich auch erwiesen, wenn das Kommunikationsmodul ein Netzteil oder ein Schaltnetzteil aufweist, mit dem aus der Versorgungswechselspannung eine Gleichspannung zur Spannungsversorgung eines Modems für die Datenübertragung und/oder für den Mikrocontroller erzeugt wird.

Das Schaltnetzteil ist vorzugsweise mit einem Filter zur Energiespeicherung und zum Herausfiltern von Störungen im Frequenzbereich der Taktung des Mikrocontrollers ausgestattet. Geeignet ist als Filter ein PE-Filter.

Mit Vorteil weist das System-Interface eine galvanisch von der Schaltungsanordnung mit dem Mikrocontroller getrennte Bediener- und/oder Kundendienstschnittstelle auf. Dadurch wird eine hohe Bediensicherheit gewährleistet.

Weitere Vorteile der Erfindung ergeben sich aus der nachstehenden Beschreibung. Die Erfindung wird in einem Ausführungsbeispiel anhand der Zeichnungen näher erläutert. Diese zeigen:
- Figur 1-4: Einzelteile eines Schachts und eines Kommunikationsmoduls in perspektivischer Ansicht,
- Figur 5: eine Draufsicht auf den Schacht mit dem Kommunikationsmodul,
- Figur 6: eine Schnittansicht entlang der Linie A - A,
- Figur 7: eine Schnittansicht entlang der Linie C - C,

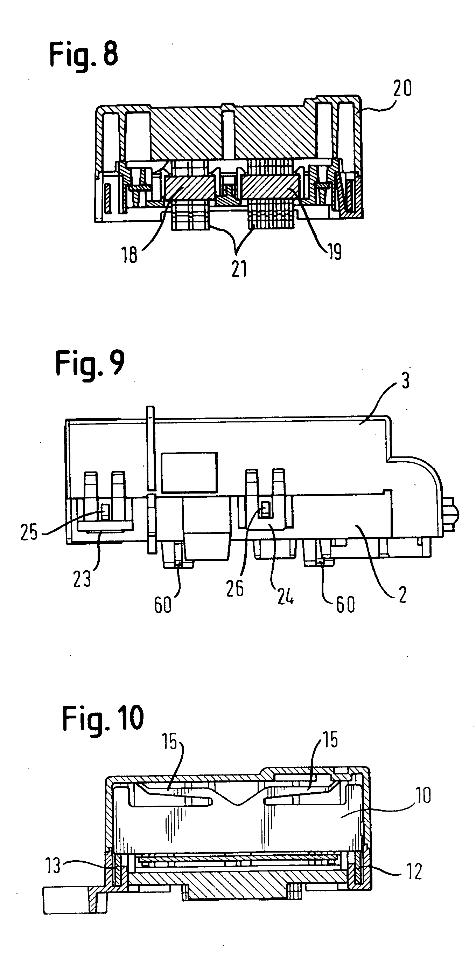

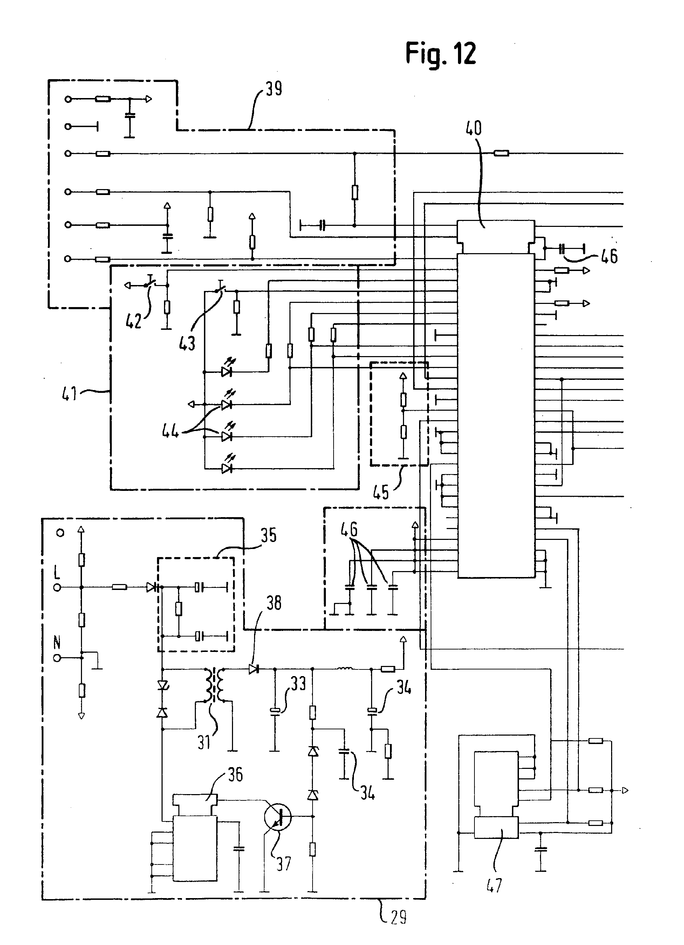

- Figur 8: eine Schnittansicht entlang der Linie D - D,
- Figur 9: eine seitliche Draufsicht auf den Schacht mit dem Kommunikationsmodul,
- Figur 10: eine Schnittansicht entlang einer Linie F - F,

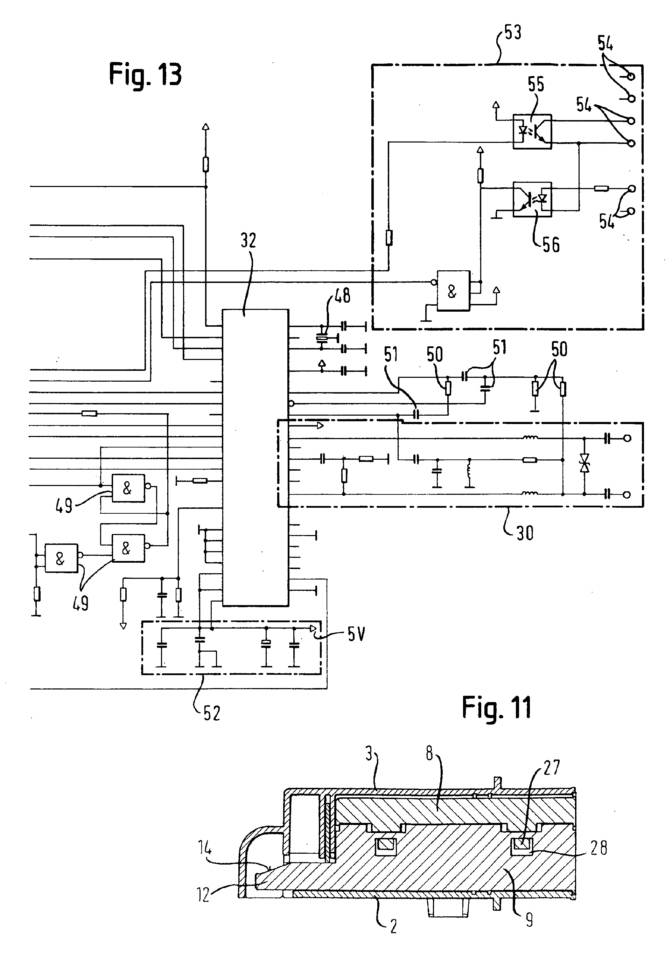

- Figur 11: eine Schnittansicht entlang einer Linie G - G,
- Figuren 12, 13: eine Übersicht der elektronischen Schaltung des System-Interface.

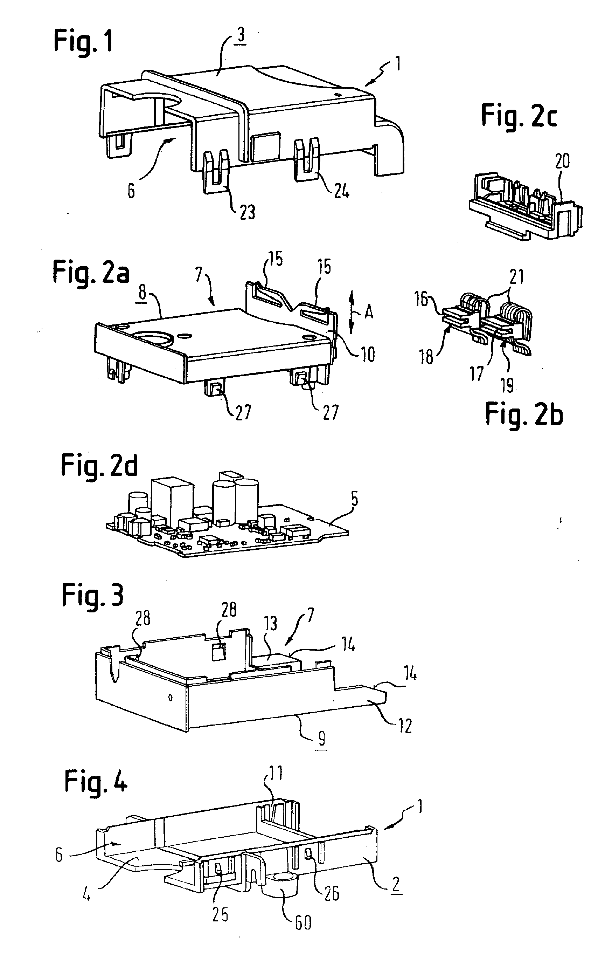

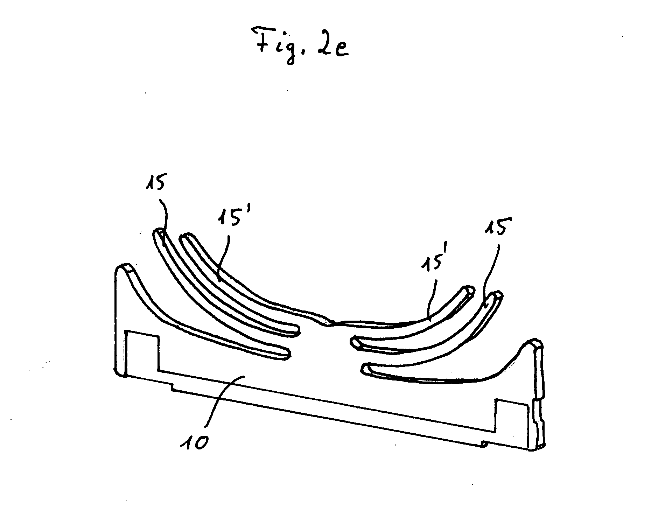

Ein Schacht 1 (Figur 1-4) weist ein Schachtunterteil 2 (Figur 4) und ein Schachtoberteil 3 (Figur 1) auf.

Das Schachtunterteil 2 weist eine im wesentlichen ebene Bodenwand 4 zur Aufnahme einer Leiterplatte 5 auf, die sich durch eine Öffnung 6 in den Schacht 1 einschieben läßt. Die Leiterplatte 5 wird von einem Gehäuse 7 mit einem Gehäuseoberteil 8 und einem Gehäuseunterteil 9 aufgenommen. Eine Wand 10 ist in einer Führung 11 an dem Schachtunterteil 2 in Richtung eines Doppelpfeils A beweglich gelagert. Wenn nun das Gehäuse 7 in den Schacht 1 durch die Öffnung 6 hineingeschoben wird, wird über Vorsprünge 12, 13 an dem Gehäuseunterteil 9, die jeweils eine schräge Anstellfläche 14 haben, die Wand 10 gegen die innere Wandung des Schachtoberteils 3 nach oben geschoben. Dabei wird eine rücktreibende Kraft elastischer Elemente 15 auf die Wand 10 ausgeübt. Die Elemente 15 drücken daher die Wand 10 wieder in ihre ursprüngliche Position zurück, wenn das Gehäuse 7 aus dem Schacht 1 herausgezogen wird.

Die Elemente 15, 15' werden insbesondere paarweise durch laschenartige Vorsprünge, sogenannte Federzungen der Wand 10 gebildet (Figur 2e). Dabei bildet jeweils ein Paar der Federzungen 15 bzw. 15' je eine Gabelfeder. Durch Verwendung der doppelten Gabelfeder 15, 15' ist gewährleistet, dass bei Abbruch einer der Gabelfedern 15 oder 15' die Funktion des Berührungsschutzes und/oder des Spritzwasserschutzes erhalten bleibt. Insbesondere bei Verwendung von Kunststoffgabelfedern 15, 15' ist die Ausbildung der doppelten Gabelfeder eine vorteilhafte Sicherheitsmaßnahme gegen Federbruch, der aufgrund von Verarbeitungsfehlern, Montageschäden oder Alterung des Kunststoffmaterials auftreten kann. Somit wird durch Verwendung der doppelten Gabelfeder 15, 15' auf einfache Weise eine Sicherheitsnorm erfüllt. Alternativ lassen sich auch andere Formen von Federn einsetzen, beispielsweise Wendelfedern.

Beim Hineinschieben des Gehäuses 7 wird die Leiterplatte 5, nachdem die Wand 10 über die Vorsprünge 12, 13 nach oben geschoben ist, in Schlitze 16, 17 freier Stecker 18, 19 (Figur 2b) hineingeschoben. Dadurch wird eine elektrische Verbindung zwischen der Leiterplatte 5 und dem Spannungsversorgungsnetz hergestellt. Die Stecker 18, 19 sind von einer Steckerhalterung 20 (Figur 2c) aufgenommen.

Von den Steckern 18, 19 führt eine Mehrzahl von Kabeln 21 in das Innere des Hausgerätes, insbesondere eines Haushaltsgerätes wie eines Geschirrspülers, eines Wäschetrockners, einer Waschmaschine, usw., hinein. Das Schachtoberteil 3 und das Schachtunterteil 2 sind über Schnappverbindungen miteinander verbunden. Hierzu weist das Schachtoberteil 3 auf jeder seiner Längsseiten jeweils zwei laschenartige Vorsprünge 23, 24 auf, die über Anlaufschrägen von Vorsprüngen 25, 26 des Schachtunterteils 2 herübergeschoben werden, so dass eine formschlüssige und kraftschlüssige Verbindung zwischen dem Schachtunterteil 2 und dem Schachtoberteil 3 zustandekommt.

In ähnlicher Weise sind das Gehäuseunterteil 9 und das Gehäuseoberteil 8 miteinander verbunden. Hierbei rasten an der Unterseite der Seitenwände des Gehäuseoberteils 8 angebrachte Vorsprünge 27 in zugehöriger Ausnehmungen 28 auf der Innenseite der Längeswände des Gehäuseunterteils 9 ein.

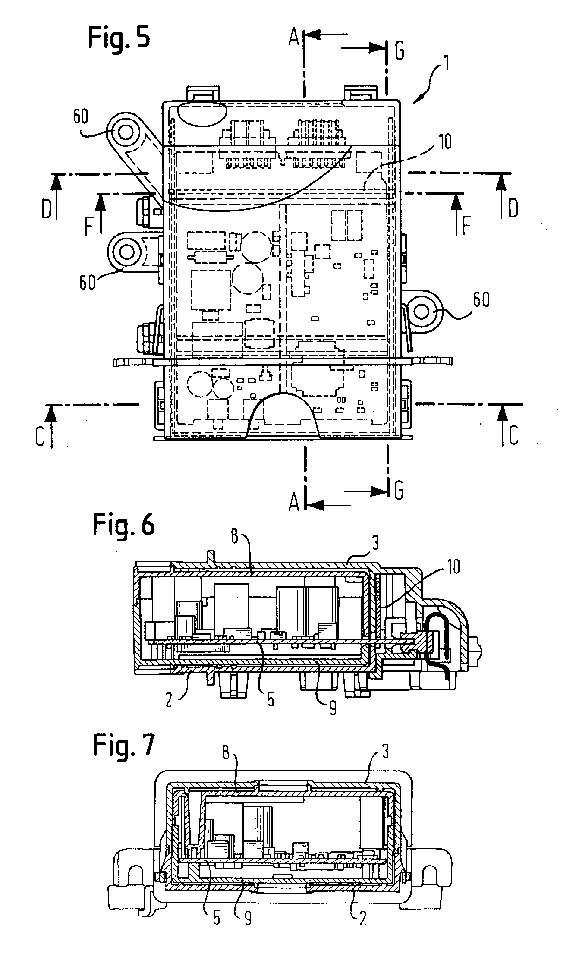

Auf der Leiterplatte 5 (Figur 4, 5) ist das System-Interface als Schaltungsanordnung aufgebracht. Es weist Anschlüsse L, N auf, die in die Stecker 18, 19 eingesteckt sind. Die Anschlüsse L, N gehören sowohl zu einem Schaltnetzteil 29 als auch zu einem Buskoppler 30. Das Schaltnetzteil 29 dient zur Spannungsversorgung der Schaltung des System-Interface mit Netzspannung. In dem Schaltnetzteil 29 wird aus der Netzspannung durch einen Übertrager 31 eine für ein Modem 32 geeignete Spannung von 9 V erzeugt. Dem Übertrager 31 ist ein Gleichsignal, beispielsweise eine Diode 38 nachgeordnet, um aus dem Wechselspannungssignal ein Gleichsignal zu erzeugen. Hochfrequente Anteile der Spannung werden über Filterkondensatoren 33, 34 herausgefiltert. Ein Pl-Filter 35 dient sowohl als Energiespeicher als auch zur Filterung von Störungen im Bereich von 132,5 KHz, d.h. indem für das System-Interface eine Wandlertaktrate erzeugt wird, mit der die Daten übertragen werden. Das Schaltnetzteil 29 enthält außerdem einen Schaltregler 36, durch den das Netzsignal zerhackt wird, um eine Spannung von 9 V zu erzeugen. Der Schaltregler 35 wird über den Kollektorstrom eines Transistors 37 angesteuert.

Ein Schaltungsteil 39 dient zur herstellerseitigen Programmierung eines Mikroprozessors 40. Durch den Programmiervorgang, der herstellerseitig einmalig erfolgt, wird der Mikroprozessor 40 in die Lage versetzt, Daten aufzunehmen und weiter zu verarbeiten.

Ein Schaltungsteil 41 dient zur interaktiven Einflußnahme eines Benutzers, beispielsweise für Service-Zwecke, um über Schalter 42, 43 bestimmte vorgesehene Programme einzuschalten. Über Leuchtdioden 44 wird angezeigt, welches Programm ausgewählt ist und wann es beendet ist.

Ein Jumper 45 dient, um abzufragen, ob das System-Interface im Test- oder im Normalbetrieb arbeitet.

Zur Stabilisierung und Entstörung der Betriebsspannung dienen zwischen Massekontakt und Ausgängen des Mikrocontrollers 40 geschaltete Kondensatoren 46.

Zusätzlich zu einem in dem Mikrocontroller 40 angeordneten EEPROM und einem Flashspeicher ist als weiterer Speicher ein EEPROM 47 vorhanden, das an Ausgängen des Mikroprozessors 40 angeschlossen ist.

Über einen Schwingquartz 48 wird das Modem 32 mit einer Taktfrequenz von 16 MHz beaufschlagt. Um den Mikroprozessor 40 und das Modem 32 mit denselben Taktfrequenzen arbeiten zu lassen, ist zwischen beiden eine Schaltungsanordnung mit Flippflopps 49 angeordnet.

Das über die Eingänge L und N eingespeiste auf der Netzspannung aufmodulierte Signal wird über ein aktives Filter mit einem in dem Modem 32 integriertem Operationsverstärker gefiltert. Zu dem aktiven Filter gehören Widerstände 50 und Kondensatoren 51. Der Buskoppler 30 dient zum Aufmodulieren eines von dem Modem 32 erzeugten Signal auf die Eingänge L, N und gleichzeitig als passives Eingangsfilter.

Das Modem 32 erzeugt eine Spannung von 5 V, die als Spannungsversorgung für den Mikroprozessor 40 dient und nach digitalen und analogen Anteilen getrennt über eine Filterbeschaltung 52 gefiltert wird.

Außerdem weist das System-Interface eine Schnittstelle 53 mit Eingängen 54 auf, über die ein Bediener und ein Kundendiensttechniker Daten eingeben oder empfangen kann. Aus Sicherheitsgründen sind die Eingänge 54 über Oktokoppler 55, 56 galvanisch von den elektrischen Leitungen des System-Interface getrennt.

Das vorstehend beschriebene System-Interface ist ein Kommunikationsmodul, in dem die Ein-/Ausgänge L, N sowohl eine Verbindung zu dem Spannungsversorgungsnetz als auch zu einem Datenübertragungsnetz bilden. Das System-Interface ist in dem Schacht 1 untergebracht, der entweder in eine an dem Hausgerät vorgesehene schachtförmige Vertiefung hineinsteckbar ist, wie aus der EP 0 802 465 A2 bekannt ist, oder der Schacht 1 wird mittels an dem Schachtunterteil 2 seitlich angeordneter Schraublöcher aufweisenden Laschen 16 an einer Außenwand oder einem sonstigen zugänglichen Element eines Hausgerätes befestigt. Im Fall eines Herdes ist der Schacht 1 vorzugsweise im Bereich der Rückwand angeordnet. Bei einer Dunstabzugshaube oder einer Esse lässt sich der Schacht 1 an einer Frontseite des Abluftkanals oder im Bereich der Einsaugöffnung anordnen. Bei einer Waschmaschine und einem Wäschetrockner wird der Schacht 1 bevorzugt an der Rückwand angeordnet. Bei einer Geschirrspülmaschine läßt sich der Schacht 1 auch unterhalb der frontseitigen Klapptür im Sockelbereich anordnen oder an der Klapptür selbst, wobei bevorzugt der Schacht 1 in der Nähe der Bedien- oder Anzeigeelemente angebracht wird. In einem Kühlschrank läßt sich der Schacht 1 bevorzugt im Bereich des Motorraums montieren.

Durch die Erfindung wird ein elektrisches Hausgerät, insbesondere ein elektrisches Haushaltsgerät geschaffen, das über ein Kommunikationsmodul mit einem Datennetz verbunden ist, wobei das Datennetz wenigstens im Bereich des Hausgerätes von dem Spannungsversorgungsnetz gebildet wird (Powerline Communication). Das Kommunikationsmodul ist in einem Schacht 1 angeordnet, der mit einer einen Berührungsschutz bildenden Wand 10 ausgestattet ist, wodurch verhindert wird, dass ein Bediener, der das Kommunikationsmodul von dem Hausgerät entfernt oder in dieses hineinsteckt dabei elektrische Teile berührt und einen elektrischen Schlag erhält. Die Wand 10 hat außerdem die Funktion eines Spritzwasserschutzes, wie er bei wasserführenden Hausgeräten, beispielsweise einem Geschirrspüler oder einer Waschmaschine notwendig ist. Die Wand 10 ist gegen die rücktreibende Kraft von Federelementen 15 verschiebbar in dem Schacht 1 angeordnet.

## Patentansprüche

1. Elektrisches Hausgerät, insbesondere elektrisches Haushaltgerät, das über eine in einem am oder im Hausgerät lösbar angebrachten Kommunikationsmodul angeordnete Schnittstelle mit einem Datennetz und/oder mit einem Spannungsversorgungsnetz verbindbar ist, **dadurch gekennzeichnet, dass** das Hausgerät zum Anschluss des Kommunikationsmoduls mit einem Berührungsschutz (10) ausgestattete elektrische Anschlüsse (18, 19) zu dem Datennetz und/oder zu dem Spannungsversorgungsnetz aufweist.

2. Elektrisches Hausgerät nach Anspruch 1, **dadurch gekennzeichnet, dass** das Hausgerät einen Schacht (1) zur Aufnahme des Kommunikationsmoduls aufweist, der in eine zugehörige Ausnehmung des Hausgerät einschiebbar oder an das Hausgerät ansteckbar oder anschraubbar ist.

3. Elektrisches Hausgerät nach Anspruch 1 oder 2, **dadurch gekennzeichnet, dass** der Schacht (1) aus einem Schachtoberteil (3) und einem Schachtunterteil (2) aufgebaut ist, die ineinander steckbar, verschnappbar oder verschraubbar ausgebildet sind.

4. Elektrisches Hausgerät nach einem der Ansprüche 1 bis 3, **dadurch gekennzeichnet, dass** in den Schacht (1) das Kommunikationsmodul mit einem Gehäuse (7) zur Aufnahme einer Leiterplatte (5) eingebracht ist, die Anschlüsse (L, N) zu dem Spannungsversorgungsnetz aufweist.

5. Elektrisches Hausgerät nach Anspruch 4, **dadurch gekennzeichnet, dass** das Gehäuse (7) ein Gehäuseoberteil (8) und ein Gehäuseunterteil (9) aufweist, die ineinander steckbar, verschnappbar oder verschraubbar ausgebildet sind.

6. Elektrisches Hausgerät nach einem der Ansprüche 1 bis 5, **dadurch gekennzeichnet, dass** das Schachtunterteil (2) eine Aufnahme für eine verschiebbar gelagerte Wand (10) aufweist, durch die Stecker (18, 19) für die Spannungsversorgung des Kommunikationsmoduls abschirmbar sind.

7. Elektrisches Hausgerät nach Anspruch 6, **dadurch gekennzeichnet, dass** die Wand (10) elastisch in dem Schacht (1) gelagert ist und beim Hineinschieben des Gehäuses (7) zum Freilegen der Stecker (18, 19) verschiebbar ist.

8. Elektrisches Hausgerät nach Anspruch 7, **dadurch gekennzeichnet, dass** die Wand (10) durch einen Vorsprung des Gehäuses (7) verschiebbar ist.

9. Elektrisches Hausgerät nach Anspruch 8, **dadurch gekennzeichnet, dass** der Vorsprung (12, 13) durch eine Schräge (14) gebildet ist.

10. Elektrisches Hausgerät nach einem der Ansprüche 7 bis 9, **dadurch gekennzeichnet, dass** die elastische Lagerung der Wand (10) durch federnde Vorsprünge (15, 15') der Wand (10) gebildet ist.

11. Elektrisches Hausgerät nach Anspruch 10, **dadurch gekennzeichnet, dass** die federnden Vorsprünge (15, 15') der Wand (10) zumindest eine Gabelfeder bilden.

12. Elektrisches Hausgerät nach dem vorhergehenden Anspruch, **dadurch gekennzeichnet, dass** die federnden Vorsprünge (15, 15') der Wand (10) eine doppelte Gabelfeder bilden.

13. Elektrisches Hausgerät nach einem der Ansprüche 1 bis 12, **dadurch gekennzeichnet, dass** die Anschlüsse (18, 19) sowohl für die Spannungsversorgung als auch als Datenein- und Datenausgänge dienen.

14. Elektrisches Hausgerät nach einem der Ansprüche 1 bis 13, **dadurch gekennzeichnet, dass** das Kommunikationsmodul einen Mikroprozessor (40) zur Steuerung des Hausgeräts aufweist.

15. Elektrisches Hausgerät nach Anspruch 14, **dadurch gekennzeichnet, dass** der Mikroprozessor (40) über eine Monitorschnittstelle (39) programmierbar ist.

16. Elektrisches Hausgerät nach Anspruch 14 oder 15, **dadurch gekennzeichnet, dass** das Kommunikationsmodul ein Schaltnetzteil (29) aufweist, mit dem aus der Versorgungswechselspannung eine erste Gleichspannung zur Spannungsversorgung eines Modems (32) für die Datenübertragung und/oder für den Mikroprozessor (40) erzeugbar ist.

17. Elektrisches Hausgerät nach Anspruch 16, **dadurch gekennzeichnet, dass** das Schaltnetzteil (29) ein Filter (35) zur Energiespeicherung und zum Herausfiltern von Störungen im Frequenzbereich der Taktung des Mikroprozessors (40) aufweist.

18. Elektrisches Hausgerät nach Anspruch 17, **dadurch gekennzeichnet, dass** das Filter (35) ein Pl-Filter ist.

19. Elektrisches Hausgerät nach einem der Ansprüche 14 bis 18, **dadurch gekennzeichnet, dass** das Kommunikationsmodul eine galvanisch von der Schaltungsanordnung mit dem Mikroprozessor (40) getrennte Bediener- und/oder Kundendienstschnittstelle (53) aufweist.

20. Schacht zur Aufnahme eines Kommunikationsmoduls für ein elektrisches Hausgerät, insbesondere ein elektrisches Haushaltgerät, **dadurch gekennzeichnet, dass** der Schacht zum Anschluss des Kommunikationsmoduls an das Hausgerät mit einem Berührungsschutz (10) ausgestattete elektrische Anschlüsse (18, 19) zu dem Datennetz und/oder zu dem Spannungsversorgungsnetz aufweist.

21. Schacht nach Anspruch 20, **dadurch gekennzeichnet, dass** der Schacht in eine zugehörige Ausnehmung des Hausgerätes einschiebbar oder an das Hausgerät ansteckbar oder anschraubbar ist.

22. Schacht nach Anspruch 20 oder 21, **dadurch gekennzeichnet, dass** der Schacht (1) aus einem Schachtoberteil (3) und einem Schachtunterteil (2) aufgebaut ist, die ineinander steckbar, verschnappbar oder verschraubbar ausgebildet sind.

23. Schacht nach Anspruch 20 bis 22, **dadurch gekennzeichnet, dass** in den Schacht (1) das Kommunikationsmodul mit einem Gehäuse (7) zur Aufnahme einer Leiterplatte (5) einführbar ist, die Anschlüsse (L, N) zu dem Spannungsversorgungsnetz aufweist.

24. Schacht nach Anspruch 22 oder 23, **dadurch gekennzeichnet, dass** das Schachtunterteil (2) eine Aufnahme für eine verschiebbar gelagerte Wand (10) aufweist, durch die Stecker (18, 19) für die Spannungsversorgung des Kommunikationsmoduls abschirmbar sind.

25. Schacht nach Anspruch 24, **dadurch gekennzeichnet, dass** die Wand (10) elastisch in dem Schacht (1) gelagert ist und beim Hineinschieben des Gehäuses (7) zum Freilegen der Stecker (18, 19) verschiebbar ist.

26. Schacht nach Anspruch 25, **dadurch gekennzeichnet, dass** die Wand (10) durch einen Vorsprung des Gehäuses (7) verschiebbar ist.

27. Schacht nach Anspruch 25 oder 26, **dadurch gekennzeichnet, dass** die elastische Lagerung der Wand (10) durch federnde Vorsprünge (15, 15') der Wand (10) gebildet ist.

28. Schacht nach Anspruch 27, **dadurch gekennzeichnet, dass** die federnden Vorsprünge (15, 15') der Wand (10) zumindest eine Gabelfeder bilden.

29. Schacht nach Anspruch 28, **dadurch gekennzeichnet, dass** die federnden Vorsprünge (15, 15') der Wand (10) eine doppelte Gabelfeder bilden.

30. Kommunikationsmodul mit einer Schnittstelle, durch die ein elektrisches Hausgerät, insbesondere elektrisches Haushaltgerät, mit einem Datennetz und/oder mit einem Spannungsversorgungsnetz verbindbar ist, **dadurch gekennzeichnet, dass** das Kommunikationsmodul zum Anschluss an mit einem Berührungsschutz (10) ausgestattete elektrische Anschlüsse (18, 19) des Hausgerätes zu dem Datennetz und/oder zu dem Spannungsversorgungsnetz ausgebildet ist.

31. Kommunikationsmodul nach Anspruch 30, **dadurch gekennzeichnet, dass** das Kommunikationsmodul Mittel zum Freilegen der elektrischen Anschlüsse (18, 19) von dem Berührungsschutz (10) aufweist, so dass das Kommunikationsmodul mit dem Hausgerät elektrisch verbindbar ist.

32. Kommunikationsmodul nach Anspruch 31, **dadurch gekennzeichnet, dass** das Kommunikationsmodul in einen Schacht (1) des Hausgerätes einführbar ist, und dass durch Einführen des Kommunikationsmoduls in den Schacht (1) eine verschiebbar gelagerte Wand (10), durch die die Anschlüsse (18, 19) abgeschirmt sind, derart verschiebbar ist, dass das Kommunikationsmodul mit den Anschlüssen (18, 19) verbindbar ist.

33. Kommunikationsmodul nach einem der Ansprüche 30 bis 32, **dadurch gekennzeichnet, dass** das Kommunikationsmodul mit einem Gehäuse (7) zur Aufnahme einer Leiterplatte (5) ausgebildet ist, die Anschlüsse (L, N) zu dem Spannungsversorgungsnetz aufweist.

34. Kommunikationsmodul nach Anspruch 33, **dadurch gekennzeichnet, dass** das Gehäuse (7) ein Gehäuseoberteil (8) und ein Gehäuseunterteil (9) aufweist, die ineinander steckbar, verschnappbar oder verschraubbar ausgebildet sind.

35. Kommunikationsmodul nach Anspruch 33 oder 34, **dadurch gekennzeichnet, dass** die Wand (10) durch einen Vorsprung des Gehäuses (7) verschiebbar ist.

36. Kommunikationsmodul nach Anspruch 35, **dadurch gekennzeichnet, dass** der Vorsprung (12, 13) eine Anlaufschräge (14) aufweist.
